# EUROPÄISCHE PATENTSCHRIFT

(11) **EP 2 261 024 B1**
(45) Veröffentlichungstag und Bekanntmachung des Hinweises auf die Patenterteilung: **12.03.2014**
(21) Anmeldenummer: 10003464.4
(22) Anmeldetag: 30.03.2010
(51) Int. Cl.: B32B 3/06, G07F 7/08

(54) **Mehrschichtiger kartenförmiger Datenträger**
Multi-layer card-shaped data carrier
Support de données sous forme de cartes multicouches

(30) Priorität: 06.04.2009 DE 102009016526
(43) Veröffentlichungstag der Anmeldung: 15.12.2010
(73) Patentinhaber: Giesecke & Devrient GmbH, 81677 München (DE)
(72) Erfinder: Riedl, Josef, 85395 Attenkirchen (DE)

(56) Entgegenhaltungen:
- WO-A1-2008/144336
- US-A1- 2005 175 807
- US-A1- 2008 003 394

## Beschreibung

Die Erfindung betrifft einen mehrschichtigen kartenförmigen Datenträger, insbesondere solche mit darin enthaltenen elektronischen Bauelementen, wie zum Beispiel eine Chipkarte, Displaykarte und dergleichen.

Kartenförmige Datenträger der vorgenannten Art werden entweder im Spritzgussverfahren oder - häufiger - in Laminiertechnik hergestellt. Die vorliegende Erfindung befasst sich mit der Herstellung mehrschichtiger kartenförmiger Datenträger in Laminiertechnik. Diese Technik ist beispielsweise in Haghiri, Tarantino "Vom Plastik zur Chipkarte", Carl Hanser Verlag, 1999 ausführlich beschrieben. Bei der Laminiertechnik werden übereinander liegende Folien unter Anwendung von Druck und Temperatur miteinander verpresst. In den meisten Fällen sind die Kartenschichten thermoplastische Folienmaterialien, die in verpresstem Zustand bis zur Erweichungstemperatur der Verbindungsschichten erhitzt werden. Falls nicht thermoplastische Materialien Bestandteil des Schichtverbunds sind, können diese mittels eines Laminierklebers laminiert werden. Dabei handelt es sich in der Regel um Schmelzkleber oder Heißkleber.

Problematisch stellt sich die Einbringung druck- und/ oder temperaturempfindlicher Sicherheitsmerkmale und Bauelemente, insbesondere elektronischer Bauelemente, dar. Soweit möglich werden diese erst nachträglich in speziell vorgesehene Kavitäten montiert. Es ist auch bekannt, die Schichten langsam aufzuschmelzen und den Druck dazu korrelierend so aufzubringen, dass die Bauelemente vergleichsweise sanft in die erweichten Schichten eingebettet werden. Aufgrund des immer noch erheblichen Drucks und insbesondere der hohen Temperaturen müssen empfindliche Bauelemente dennoch separat in den Kartenkörper montiert werden.

Es besteht daher Bedarf für Kaltlaminiertechniken zur Herstellung von kartenförmigen tragbaren Datenträgern, insbesondere Kaltlaminiertechniken mit geringen auf das Laminat ausgeübten Drücken, um bereits beim Laminierprozess empfindliche Merkmale und Bauelemente in den Schichtverbund integrieren zu können.

Diese Aufgabe wird durch ein Verfahren mit den Merkmalen des anhängenden unabhängigen Verfahrensanspruchs gelöst. In davon abhängigen Ansprüchen sind vorteilhafte Ausgestaltungen des Verfahrens angegeben. Ein entsprechend hergestellter Datenträger ist in Anspruch 1 und davon abhängigen Ansprüchen angegeben.

Dementsprechend weist ein erfindungsgemäßer, im Kaltlaminierprozess hergestellter mehrschichtiger kartenförmiger Datenträger mindestens zwei Folienschichten auf, die durch elektronenstrahlgehärtetes Material miteinander verbunden sind. Anstatt also zwei thermoplastische Folienschichten durch Anwendung von Druck und Temperatur unmittelbar oder im Falle von nicht thermoplastischen Materialien unter Einsatz eines warmaushärtenden Laminierklebers miteinander zu verbinden, fungiert das elektronenstrahlhärtbare Material als Laminierkleber. Dementsprechend wird das elektronenstrahlhärtbare Material auf mindestens eine Oberfläche von zwei miteinander zu verbindenden Folienschichten aufgetragen und die beiden Folienschichten werden derart zusammengeführt, dass das elektronenstrahlhärtbare Material eine Verbindung zwischen den beiden Folienschichten bildet. Durch anschließendes Trocknen des elektronenstrahlhärtbaren Materials mittels Elektronenbestrahlung durch eine der beiden Folienschichten hindurch wird dann ein fester Schichtverbund erzeugt. Zur Beschleunigung des Verfahrens ist es vorteilhaft, den Schichtaufbau gleichzeitig von beiden Seiten mit Elektronenstrahlung zu beaufschlagen.

Elektronestrahlhärtbare Kunststoffsysteme, sogenannte ESH-Lacke, und deren Trocknung bzw. Härtung mittels Elektronenbestrahlung ist grundsätzlich bekannt. Im Zusammenhang mit der Herstellung kartenförmiger Datenträger ist der Einsatz dieser Lacke jedoch bisher, soweit ersichtlich, beschränkt auf die Erzeugung einer besonders harten, kratzbeständigen außen liegenden Deckschicht (JP-A-3203837; JP-A-3119531).

Die Verwendung von ESH-Lacken als Laminierkleber ermöglicht es, kartenförmige Datenträger unter Einsatz geringster Drücke im Kaltlaminierverfahren herzustellen. Als besonderer Vorteil sind ein geringer Energiebedarf und eine kurze Prozessdauer zu nennen. Der Laminierkleber kann, wenn er entsprechend dick aufgetragen wird, vorteilhaft dazu benutzt werden, elektronische Bauteile und/oder Sicherheitsmerkmale, die temperaturempfindlich und/oder insbesondere druckempfindlich sind, im Schichtaufbau schonend zu integrieren, indem sie in die elektronenstrahlhärtbare Schicht eingebettet werden. Als elektronisches Bauelement kommt insbesondere ein Chip in Betracht, aber auch andere Elemente, wie zum Beispiel ein Display.

Die mittels des elektronenstrahlhärtbaren Materials zu verbindenden Folienschichten lassen sich sowohl als Rollenware als auch im Bogenformat laminieren, und aus dem fertigen Schichtverbund lassen sich die einzelnen Datenträger, beispielsweise im ID-1-Format, herausteilen.

Üblicherweise sind mehrschichtig aufgebaute kartenförmige Datenträger symmetrisch zur zentralen Ebene aufgebaut, um einen unerwünschten Verzug, der zu Wölbungen führen könnte, zu vermeiden. Sie umfassen daher in der Regel eine erste Folienschicht als zentral liegendes Foliensubstrat, auf das ein oder mehr weitere Folienschichten zu jeder Seite appliziert werden. Sofern es der Schichtaufbau zulässt, insbesondere wenn die Füllmaterialien der einzelnen Folienschichten den Durchgang von Elektronenstrahlung nicht zu stark behindern, kann der gesamte Schichtaufbau einer Elektronenstrahlhärtungsvorrichtung zugeführt werden, um alle im Schichtaufbau enthaltenen Lagen aus elektronenstrahlhärtbarem Material gleichzeitig mittels Elektronenbestrahlung zu trocknen. Im anderen Extremfall kann es dagegen notwendig sein, nach jedem Aufbringen einer Folienschicht das die Verbindung herstellende, zwischenliegende elektronenstrahlhärtbare Material mittels Elektronenbestrahlung zu trocknen, um einen festen Verbund mit der darunter liegenden Folienschicht zu erzeugen, bevor die nächste Folienschicht oder Folienschichten appliziert wird bzw. werden.

Vorteilhaft können elektronische Bauelemente oder andere druckempfindliche Elemente, insbesondere druckempfindliche Sicherheitsmerkmale, in relativ dick aufgetragenes, elektronenstrahlhärtbares Material eingebettet werden. Es kann in Ausnahmefällen auch zweckmäßig sein, dieses Material zunächst als eigenständige Schicht mittels Elektronenbestrahlung zu trocknen, bevor auf diese Schichten ein oder mehrere weitere Folienschichten laminiert werden. In solchen Fällen kann zwischen dem bereits elektronenstrahlgehärteten Material und der darauf zu applizierenden Folie ein reaktiver Klebstoff aufgebracht werden, beispielsweise ein Ein-Komponenten-System oder Zwei-Komponenten-System, auch bekannt als "1K- oder 2K-Reaktivsystem", und etwaige weitere Schichten können beispielsweise wieder mittels elektronenstrahlhärtbarem Material miteinander verbunden werden, so dass ein solcher Schichtaufbau wiederum in einem einzigen Kaltlaminierprozess zu einem stabilen Schichtverbund unter Einwirkung von Elektronenstrahlen miteinander verbunden werden kann. Die etwa in der Mitte des Schichtverbunds liegende und daher der Elektronenbestrahlung nur bedingt zugängliche Grenzschicht zwischen dem bereits elektronenstrahlgehärteten Material, in dem die empfindlichen Elemente aufgenommen sind, und der darüber liegenden Folienschicht härtet dann unabhängig von der Elektronenbestrahlung aufgrund der Reaktivität des verwendeten Reaktionsklebers aus. Wenn es die Elektronendurchlässigkeit des Schichtaufbaus zulässt, kann statt eines 1K- oder 2K-Reaktionsklebers auch für diese zentral liegende Grenzschicht ein elektronenstrahlhärtbares Material zum Einsatz kommen. In jedem Fall kann auf diese Weise bei der Einbettung von elektronischen Bauelementen oder anderen druckempfindlichen Elementen eine Kaltlaminierung ohne größere Druckeinwirkung für dickere Schichtaufbauten gewährleistet werden.

Nachfolgend wird die Erfindung beispielhaft anhand der begleitenden Zeichnungen erläutert. Darin zeigen:
- Figur 1: schematisch die Herstellung dreischichtiger Datenträger ausge- hend von Rollenware,
- Figur 2: schematisch die Herstellung fünfschichtiger Datenträger ausge- hend von Rollenware,
- Figur 3: schematisch die alternative Herstellung fünfschichtiger Datenträ- ger ausgehend von Rollenware,
- Figur 4: schematisch die Herstellung fünfschichtiger Datenträger ausge- hend von Rollenware ähnlich wie Figur 2, jedoch unter Einbettung elektronischer Komponenten,
- Figur 5: schematisch die Herstellung fünfschichtiger Datenträger ausge- hend von Rollenware gemäß einer weiteren Alternative,
- Figur 6: schematisch die Herstellung dreischichtiger Datenträger ausge- hend von Bogenformat-Folien und
- Figur 7: schematisch die Herstellung mehrschichtiger Datenträger ausge- hend von Bogenformat-Folien in mehreren Stufen.

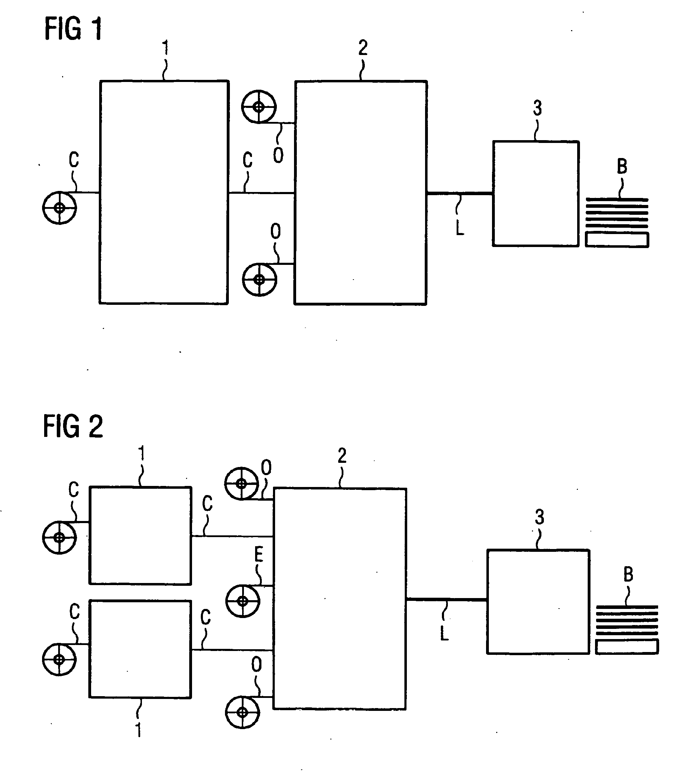

Fig.1 zeigt in einem ersten Ausführungsbeispiel die Herstellung von dreischichtigem Bogenmaterial B zur weiteren Herstellung von kartenförmigen Datenträgern aus einem dreischichtigen Laminat. Bei den Datenträgern kann es sich insbesondere um mit einem elektronischen Bauelement ausgestattete für das ständige Mitführen konzipierte Karten im Kreditkartenformat wie Smartcards, IC-Karten, Chipkarten, elektronische Ausweise oder auch andersformatige Karten wie SIM-Karten, intelligente Speicherkarten oder ähnliche handeln. Bauelemente könnten z.B. ICs, Sensoren, Antennen, Anzeigelemente oder auch damit ausgerüstete Platinen sein.

Zunächst wird eine beispielsweise weiße Inlettfolie C einseitig oder beidseitig bedruckt, wobei das beidseitige Bedrucken registergenau auf der Vorderseite und Rückseite erfolgt. Dies geschieht in der Bearbeitungsstation 1. Alternativ kann die Inlettfolie C bereits in bedrucktem Zustand dem Verfahren zugeführt werden, denn die Bearbeitungsstation 1 dient vornehmlich dazu, auf die Inlettfolie C beidseitig elektronenstrahlhärtbaren Lack aufzutragen.

Die derart vorbehandelte Inlettfolie C läuft dann gemeinsam mit zwei von beiden Seiten zugeführten Deckfolien O in eine zweite Bearbeitungsstation 2 ein (Kaltlaminiereinheit). In der zweiten Bearbeitungsstation 2 werden die beiden Deckfolien O auf die Inlettfolie C aufgefahren und der dazwischen liegende Lack mittels Elektronenstrahlhärtung getrocknet, so dass insgesamt ein stabiler Schichtverbund entsteht. Die Bearbeitungsstation 1 kann auch entfallen und das Beschichten mit elektronenstrahlhärtbarem Material in der zweiten Bearbeitungsstation erfolgen, insbesondere wenn die Inlettfolie C bereits bedruckt zugeführt wird und daher nicht mehr bedruckt zu werden braucht.

Es handelt sich um einen kontinuierlichen Prozess, bei dem die Folien C, O von Vorratsrollen abgezogen werden. Die Deckfolien O können bereits bedruckt sein oder mit speziellen Elementen ausgestattet sein, wie zum Beispiel Magnetstreifen, Hologrammen, Sicherheitsdrucken und dergleichen. Optional kann die ein und/ oder andere Deckschicht O auch vollständig durch einen elektronenstrahlhärtbaren Lack ersetzt werden. Das aus der zweiten Bearbeitungsstation 2 austretende Laminat L (Dicke ca. 800 µm) wird anschließend in einer dritten Bearbeitungsstation in Bögen B geteilt, aus denen später einzelne kartenförmige Datenträger des gewünschten Endformats, insbesondere mit ID-1-Format, herausgetrennt werden können. Die dritte Bearbeitungsstation 3 kann daher eine herkömmliche Bogenschneideanlage sein. Statt das Laminat in Bögen B aufzuteilen, kann es auch gleich in Kartenformat geschnitten werden.

Figur 2 zeigt ein Beispiel zur Herstellung eines fünfschichtigen Laminats unter Verwendung eines elektronenstrahlhärtbaren Laminierklebers. Zunächst werden zwei Inlettfolien C, die beispielsweise transparent sind, in einer ersten Bearbeitungsstation 1 einseitig bedruckt, soweit sie nicht bereits bedruckt sind, und beidseitig elektronenstrahlhärtbares Material aufgetragen. Diese beiden Folien werden dann der zweiten Bearbeitungsstation 2 zur Kaltlaminierung durch Trocknung mittels Elektronenbestrahlung zugeführt, wobei eine opake Kernfolie E zwischen die beiden transparenten, bedruckten Inlettfolien C gefahren und zwei Deckfolien O von beiden Seiten zugeführt werden. Beim Übereinanderlegen werden alle Folien E, C, O registergenau zueinander ausgerichtet. Nach ihrer Ausrichtung erfolgt die Kaltlaminierung mittels Elektronenstrahlhärtung in der zweiten Bearbeitungsstation 2. Wie schon im Ausführungsbeispiel gemäß Figur 1 kann das Beschichten der Inlettfolie C auch wieder erst in der zweiten Bearbeitungsstation 2 erfolgen. Die erste Bearbeitungsstation 1 kann dann entfallen, insbesondere wenn die Inlettfolien nicht bedruckt werden oder bereits bedruckt zugeführt werden.

Anstatt die beiden Inlettfolien C beidseitig mit elektronenstrahlhärtbarem Material zu versehen, kann dies alternativ auch nur außenseitig erfolgen und stattdessen auf die Kernfolie E beidseitig elektronenstrahlhärtbares Material aufgetragen werden, z.B. in der zweiten Bearbeitungsstation 2. Außerdem ist es wiederum optional möglich, dass eine oder beide Deckfolien O vollständig durch eine Beschichtung aus elektronenstrahlhärtbarem Lack ersetzt werden. Außerdem ist es auch hier, wie auch in den nachfolgend beschriebenen Ausführungsbeispielen, möglich, dass die Deckfolien O bedruckt sind und/ oder besondere Elemente, wie Magnetstreifen, Hologramme, Sicherheitselemente und dergleichen enthalten.

Aufgrund der Anzahl der Schichten ist es für die Effizienz des Kaltlaminierprozesses vorteilhaft, den zu laminierenden Schichtaufbau in der zweiten Bearbeitungsstation 2 von beiden Seiten mit Elektronenstrahlen zu behandeln. Dementsprechend weist die zweite Bearbeitungseinrichtung 2 mindestens zwei, einander gegenüberliegende Elektronenstrahleinheiten auf. Das resultierende Laminat (Dicke ca. 800 µm) wird anschließend wiederum in der dritten Bearbeitungsstation 3 zu Bogen B geschnitten, aus denen dann in einem weiteren Prozess zum Beispiel Karten ausgestanzt werden.

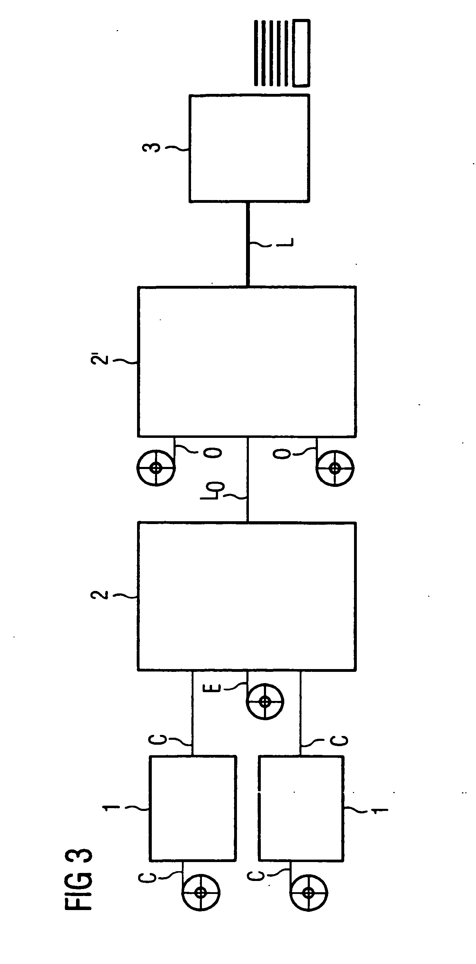

Figur 3 zeigt ein alternatives Ablaufschema zur Herstellung eines fünfschichtigen Laminats ausgehend von als Rollenware zur Verfügung gestellten Folien. Zunächst werden in einer ersten Bearbeitungsstation 1 zwei beispielsweise transparente Inlettfolien C einseitig bedruckt, anschließend in einer zweiten Bearbeitungsstation 2 mit einer opaken, beispielsweise weißen Kernfolie E zusammengeführt und kaltlaminiert. Dazu werden in der zweiten Bearbeitungsstation 2 (oder in einer vorgeschalteten Bearbeitungsstation) entweder die beiden Inlettfolien C einseitig oder, vorzugsweise, die Kernfolie E beidseitig mit elektronenstrahlhärtbarem Material beschichtet, bevor der Schichtaufbau in der Bearbeitungsstation 2 mittels Elektronenbestrahlung getrocknet, das heißt laminiert, wird. Das daraus hervorgehende Vor-Laminat L₀ wird dann einer weiteren Bearbeitungsstation 2' zugeführt, in der es wiederum beidseitig mit elektronenstrahlhärtbarem Material beschichtet und zwischen zwei Deckfolien O gefahren wird, die von beiden Seiten zugeführt werden, bevor dieser erweiterte Schichtaufbau wiederum mittels Elektronenbestrahlung zu einem festen Schichtverbund laminiert werden. Das endgültige Laminat L wird anschließend wieder in einer dritten Bearbeitungsstation 3 in Bögen aufgeteilt, um daraus später Karten, etwa im ID-1-Format zu stanzen.

Wiederum erfolgt eine registergenaue Ausrichtung der übereinander gelegten Folien jeweils vor der Kaltlaminierung mittels Elektronenbestrahlung. Außerdem ist es aufgrund der Mehrschichtigkeit wiederum von Vorteil, den Schichtaufbau von beiden Seiten mit Elektronen zu bestrahlen. Anstelle der beiden Deckfolien O können diese wiederum vollständig durch den auf die Inlettfolien C aufgetragenen elektronenstrahlhärtbaren Lack ersetzt werden.

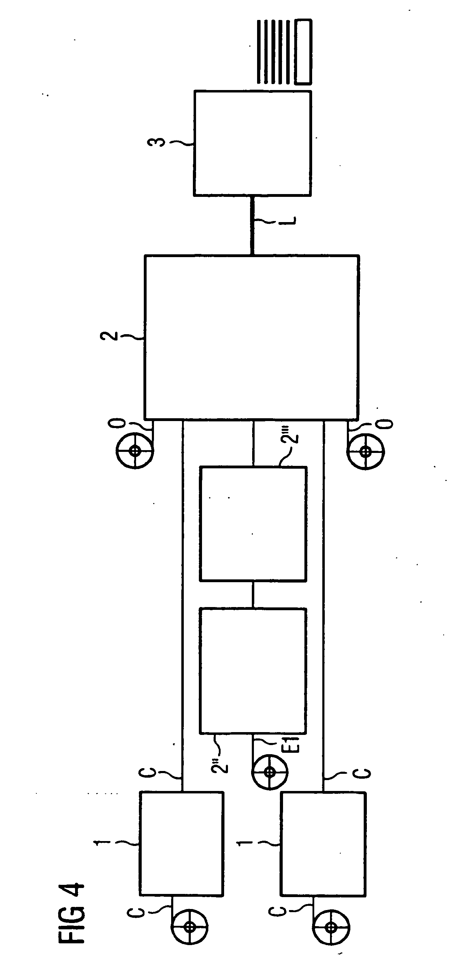

Figur 4 zeigt ein Ablaufschema zur Herstellung eines mehrschichtigen Laminats, in dem Elektronikkomponenten oder andere druckempfindliche Bauelemente integriert werden. Es werden wiederum beispielsweise zwei weiße Inlettfolien C zur Verfügung gestellt und in einer ersten Bearbeitungsstation 1 zunächst einseitig bedruckt. Von außen werden Deckfolien O auf die beiden Inlettfolien C gefahren, nachdem diese in der Bearbeitungsstation 2 mit einer elektronenstrahlhärtbaren Beschichtung versehen worden sind. Von innen wird eine Kernfolie E1 zugeführt. Insoweit stimmt dieses Verfahren überein mit dem in Bezug auf Figur 2 beschriebenen Verfahren. Der Unterschied liegt allerdings darin, dass die Kernfolie E1 mit elektronischen Bauteilen bestückt ist. Noch bevor die Kernfolie E1 mit den übrigen Folien C, O in der zweiten Bearbeitungsstation 2 zusammengeführt wird, wird sie mit elektronenstrahlhärtbarem Material beschichtet und mittels Elektronenstrahlung getrocknet. Die Schichtdicke des elektronenstrahlhärtbaren Materials wird dabei so gewählt, dass sie nach dem Trocknungsvorgang die empfindlichen Bauteile derart einbettet, dass sie aus der Schicht nicht mehr herausragen. Die Beschichtung und Trocknung erfolgt in der Bearbeitungsstation 2". Anschließend wird die so vorbereitete Kernschicht E1 in derselben Weise mit den beiden Inlettfolien C verbunden, wie dies in Bezug auf Figur 2 bereits erläutert wurde, also indem z.B. in der Basisstation 2 entweder die beiden Inlettfolien C auf ihrer der Kernfolie E1 zuweisenden Seite mit elektronenstrahlhärtbarem Material versehen wird oder indem die Kernfolie E1 beidseitig mit elektronenstrahlhärtbarem Material beschichtet wird. Andere Varianten sind auch möglich, solange die so vorbereitete Kernfolie E1 beidseitig über elektronenstrahlhärtbares Material mit den beiden Inlettfolien C verbunden wird. Das heißt auch, dass auf das bereits getrocknete elektronenstrahlhärtbare Material der vorbereiteten Kernfolie E1 nochmals elektronenstrahlhärtbares Material gelangt, um die Verbindung zu erzeugen.

Es kann zweckmäßig oder notwendig sein zwischen einer oder beiden Inlettfolien C und der vorbereiteten Kernfolie E1 anstelle oder zusätzlich zu dem elektronenstrahlhärtbaren Materials einen Kaltlaminierkleber, etwa in Form eines Reaktionsklebers aus einem Ein-Komponenten- oder Zwei-Komponenten-Reaktivsystem ("1K- oder 2K-Reaktivsystem"), aufzutragen, wenn nämlich die Elektronenstrahlung die teilweise hochgefühlten Folienschichten nicht mehr ausreichend durchstrahlen kann, um innenliegende elektronenstrahlhärtbare Materialien vollständig zu trocknen. Der Kaltlaminierkleber wird vorzugsweise mittels Elektronenstrahlhärtung durch den Schichtaufbau hindurch getrocknet. Die optionale Beschichtung der vorbereiteten Kernschicht E1 erfolgt dann, wie in Figur 4 dargestellt, in der Bearbeitungsstation 2"'. Ob die ergänzende Bearbeitungsstation 2"' zur Auftragung eines Kaltlaminierklebers, also etwa eines 1K- oder 2K-Reaktivsystems erforderlich ist, ist insbesondere abhängig von der Leistung der Elektronenstrahler, der Dicke der Folienschichten sowie dem Füllstoff und dem Füllstoffgehalt der Folienschichten. Die Vorbereitung der Kernfolie E1, das heißt das Beschichten mit elektronenstrahlhärtbarem Material und anschließende Trocknen sowie das anschließende optionale Beschichten mit einem 1K- oder 2K-Reaktivsystem kann auch in einem separaten Vorverfahren, also sozusagen "Offline", erfolgen.

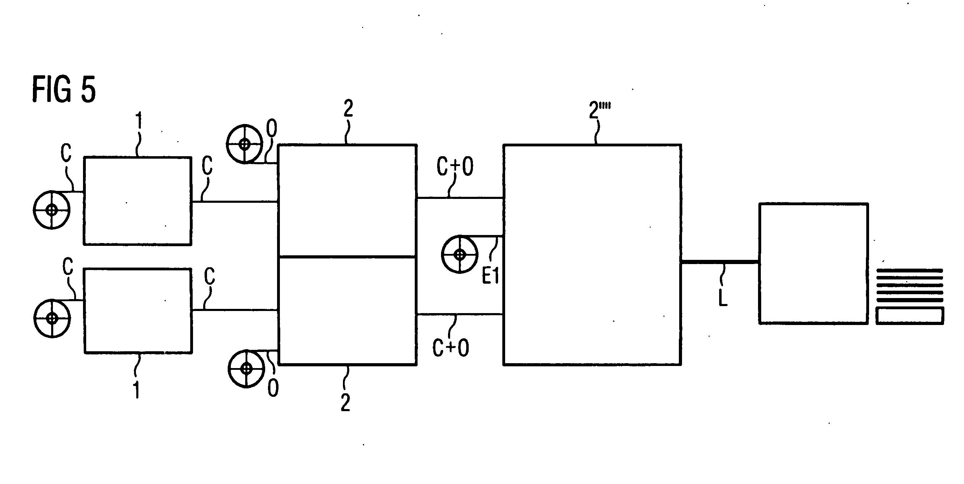

Figur 5 zeigt eine Variante zu dem zuvor in Bezug auf Figur 4 beschriebenen Verfahren, bei dem druckempfindliche Bauelemente, wie Elektronikkomponenten, mit in den Schichtaufbau integriert werden. In diesem Fall werden zunächst die beiden transparenten oder opaken Inlettfolien C in einer ersten Bearbeitungsstation 1 einseitig bedruckt und in einer zweiten Bearbeitungsstation 2 jeweils mit einer Deckfolie O in der bereits zuvor beschriebenen Weise kaltlaminiert, das heißt mit elektronenstrahlhärtbarem Material versehen und durch Elektronenbestrahlung getrocknet. Die Deckfolie O kann wiederum wie in allen vorbeschriebenen Ausführungsbeispielen auch allein durch aufgebrachtes elektronenstrahlhärtbares Material gebildet werden. Das so vorbereitete Vor-Laminat C+O wird dann einer weiteren Bearbeitungsstation 2"" zugeführt und mit einer Kernfolie E1 zusammengeführt, welche mit elektronischen Bauteilen oder anderen druck- und temperaturempfindlichen Elementen bestückt ist. Soweit diese Kernfolie E1 nicht bereits mit einer die empfindlichen Bauelemente einbettenden elektronenstrahlgehärteten Schicht und optional mit einem 1K-Reaktionskleber oder 2K-Reaktionskleber versehen ist, kann dies in der weiteren Bearbeitungsstation 2"" vor der Zusammenführung mit dem Vor-Laminat C+O erfolgen. Die Laminierung wird dann mittels Elektronenbestrahlung durch Trocknen des elektronenstrahlhärtbaren Materials realisiert, gegebenenfalls zusätzlich durch reaktives Aushärten des optional aufgebrachten 1K- oder 2K-Klebersystems.

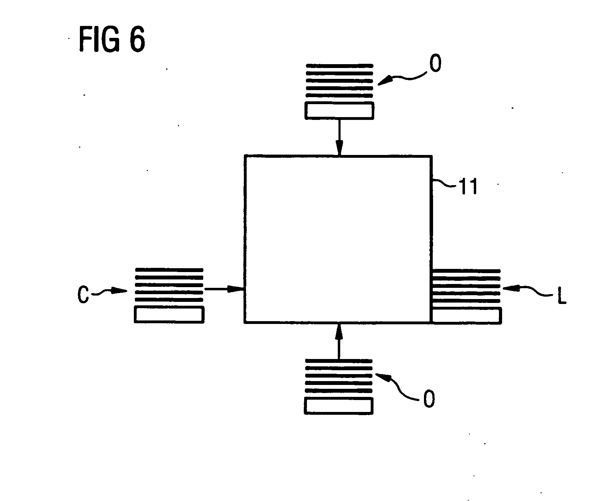

Während die Figuren 1 bis 5 den Verarbeitungsprozess von Rollenware betreffen, zeigt Figur 6 schematisch die Verarbeitung von als Bogenmaterial zur Verfügung gestellten Kunststofffolien zu Laminatbögen, aus denen anschließend die einzelnen kartenförmigen Datenträger hergestellt werden können. Dementsprechend werden einer Bearbeitungseinrichtung 11 einerseits bedruckte weiße oder transparente Bögen C und andererseits obere und untere Deckfolien O zugeführt. In der Bearbeitungsvorrichtung 11 werden die einzelnen Folien C, O zunächst mit elektronenstrahlhärtbarem Material beschichtet, anschließend registergenau übereinander gelegt und schließlich durch Elektronenbestrahlung kalt miteinander laminiert.

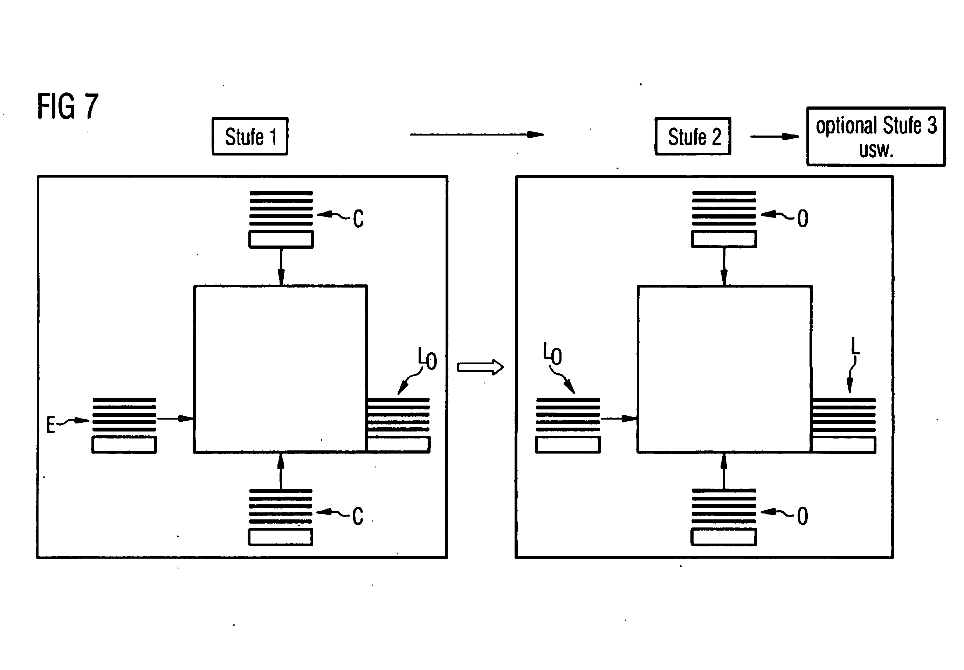

Wenn mehr als drei Folien miteinander laminiert werden sollen, kann dies in mehreren Stufen erfolgen, ähnlich wie bei den zuvor beschriebenen Varianten der Rollenapplikation. Dies ist in Figur 7 dargestellt. Das dort gezeigte Ablaufschema für Bogenformat-Ware entspricht prinzipiell dem Ablaufschema für Rollenware gemäß Figur 3. Dementsprechend werden in einer ersten Stufe zwei bedruckte, transparente Inlettfolien C mit einer dazwischen liegenden Kernfolie E zu einem ersten Vor-Laminat L₀ kaltlaminiert, indem die Folien mit elektronenstrahlhärtbarem Material beschichtet und nach ihrem registergenauen Aufeinanderlegen mittels Elektronenbestrahlung miteinander laminiert werden. Wie bei den vorbeschriebenen Rollenprozessen kann die Kernfolie E mit elektronischen Bauteilen bestückt sein und zuerst mit elektronenstrahlhärtbarem Lack beschichtet werden, um die durch die elektronischen Bauelemente hervorgerufenen Höhenunterschiede auszugleichen. Auch kann optional eine 1K- oder 2K-härtbare Kleberschicht vorgesehen sein, um die bedruckten Bögen C mit der bestückten Kernschicht E zu verkleben. In jedem Falle wird das daraus erhaltene Vor-Laminat L₀ der zweiten Prozessstufe zugeführt und dort mit einer oberen Deckfolie und einer unteren Deckfolie O wiederum in der bereits mehrfach beschriebenen Weise kaltlaminiert. Die Deckschichten O können wiederum durch einen Lack, insbesondere den elektronenstrahlhärtbaren Lack gebildet werden. Das sich aus dem zweistufigen Prozess ergebende fünfschichtige Laminat kann Gegenstand weiterer Prozessstufen sein.

Die vorbeschriebenen Ausführungsformen ermöglichen weitere Varianten, indem Schritte, die im Zusammenhang mit einer Ausführungsform beschrieben sind, mit Schritten aus anderen Ausführungsformen kombiniert werden. Die im Zusammenhang mit einer Ausführungsform beschriebenen Schritte sollen insofern grundsätzlich nicht als ausschließlich auf die zugrundegelegte Ausführungsform beschränkt verstanden werden.

## Patentansprüche

1. Mehrschichtiger kartenförmiger Datenträger, **dadurch gekennzeichnet, dass** eine innenliegende Schicht des Datenträgers, in welcher ein oder mehrere elektronische Bauelemente oder andere, druckempfindliche Elemente eingebettet sind, aus elektronenstrahlgehärtetem Material besteht und mindestens zwei Folienschichten (E, C, O) des Datenträgers durch elektronenstrahlgehärtetes Material miteinander verbunden sind.

2. Datenträger nach Anspruch 1, **dadurch gekennzeichnet, dass** in dem die zwei Folienschichten miteinander verbindenden elektronenstrahlgehärteten Material mindestens ein elektronisches Bauelement oder anderes, druckempfindliches Element eingebettet ist.

3. Verfahren zur Herstellung eines mehrschichtigen kartenförmigen Datenträgers, umfassend die Schritte:
- zur Verfügungstellen einer ersten Folienschicht (E1), die mit einem oder mehreren elektronischen Bauelementen oder anderen, druckempfindlichen Elementen bestückt ist,
- zur Verfügungstellen mindestens einer zweiten Folienschicht (O; C, O),
- Auftragen von elektronenstrahlhärtbarem Material auf die erste Folienschicht (E1) derart, dass die genannten Elemente darin eingebettet sind,
- Trocknen des elektronenstrahlhärtbaren Materials mittels Elektronenbestrahlung, und
- Auftragen von elektronenstrahlhärtbarem Material auf mindestens eine Oberfläche der getrockneten ersten Folienschicht (E1) oder eine Oberfläche der zweiten Folienschicht (C),
- Zusammenführen der ersten und zweiten Folienschichten derart, dass das elektronenstrahlhärtbare Material eine Verbindung zwischen den beiden Folienschichten bildet, und
- Trocknen des als Verbindung vorliegenden elektronenstrahlhärtbaren Materials mittels Elektronenbestrahlung, um einen festen Schichtverbund (L; L₀; C+O) zu erzeugen.

4. Verfahren nach Anspruch 3, **dadurch gekennzeichnet, dass** die erste Folienschicht (C) vor dem Schritt des Zusammenführens bedruckt wird, vorzugsweise auf beiden Seiten registergenau zueinander.

5. Verfahren nach Anspruch 3 oder 4, **dadurch gekennzeichnet, dass** der Datenträger mindestens dreischichtig hergestellt wird, indem auf jeder Oberfläche der ersten Folienschicht eine zweite Folienschicht derart appliziert wird, dass das elektronenstrahlhärtbare Material jeweils eine Verbindung zwischen der ersten und der jeweiligen zweiten Folienschicht bildet.

6. Verfahren nach Anspruch 5, **dadurch gekennzeichnet, dass** der Datenträger fünfschichtig hergestellt wird, indem jeweils auf der nach außen weisenden Oberfläche der beiden zweiten Folienschichten (C) elektronenstrahlhärtbares Material in einer ausreichenden Dicke aufgetragen wird, um nach dem Trocknen mittels der Elektronenbestrahlung eine vollflächige äußere Deckschicht (O) des herzustellenden Datenträgers zu bilden.

7. Verfahren nach Anspruch 5, **dadurch gekennzeichnet, dass** der Datenträger mindestens fünfschichtig hergestellt wird, indem jeweils auf die nach außen weisende Oberfläche der beiden zweiten Folienschichten (C) elektronenstrahlhärtbares Material aufgetragen und darauf jeweils eine dritte Folienschicht (O) appliziert wird.

8. Verfahren nach Anspruch 7, **dadurch gekennzeichnet, dass** das die erste Folienschicht (E) mit den beiden zweiten Folienschichten (C) verbindende elektronenstrahlhärtbare Material und das die beiden zweiten Folienschichten (C) mit den beiden dritten Folienschichten (O) verbindende elektronenstrahlhärtbare Material mittels Elektronenbestrahlung des gesamten Schichtaufbaus gleichzeitig getrocknet werden.

9. Verfahren nach Anspruch 7, **dadurch gekennzeichnet, dass** das die beiden zweiten Folienschichten (C) mit der jeweiligen dritten Folienschicht (O) verbindende elektronenstrahlhärtbare Material mittels Elektronenbestrahlung getrocknet wird, bevor die beiden zweiten Folienschichten (C) auf die erste Folienschicht (E) appliziert werden.

10. Verfahren nach Anspruch 8 oder 9, **dadurch gekennzeichnet, dass** vor dem Applizieren der beiden zweiten Folienschichten (C) auf die erste Folienschicht (E1) ein eine stabile Verbindung zwischen zumindest einer der beiden zweiten Folienschichten und der ersten Folienschicht unterstützendes, reaktives Ein-Komponenten-System oder Zwei-Komponenten-System aufgetragen wird.

11. Verfahren nach Anspruch 3, **dadurch gekennzeichnet, dass** der Schritt des Trocknens des elektronenstrahlhärtbaren Materials mittels Elektronenbestrahlung nach dem Schritt des Zusammenführens der ersten und zweiten Folienschichten derart erfolgt, dass das elektronenstrahlhärtbare Material eine Verbindung zwischen den ersten und beiden Folienschichten bildet.

12. Verfahren nach Anspruch 3, **dadurch gekennzeichnet, dass** der Schritt des Trocknens des elektronenstrahlhärtbaren Materials mittels Elektronenbestrahlung vor dem Schritt des Zusammenführens der ersten und zweiten Folienschichten erfolgt, wobei die Erzeugung eines festen Schichtverbunds zwischen der mit dem Elektronenstrahl gehärteten Material versehenen ersten Folienschicht (E1) und der zweiten Folienschicht (C) mittels eines Kaltlaminierklebers erfolgt.

13. Verfahren nach Anspruch 12, **dadurch gekennzeichnet, dass** als Kaltlaminierkleber elektronenstrahlhärtbares Material dient, das mittels Elektronenbestrahlung durch den Schichtaufbau hindurch getrocknet wird.

## Claims

1. A multilayer card-shaped data carrier, **characterized in that** an interior layer of the data carrier in which there are embedded one or several electronic components or other, pressure-sensitive elements, consists of electron-beam cured material, and at least two foil layers (E, C, O) of the data carrier are interconnected by electron-beam cured material.

2. The data carrier according to claim 1, **characterized in that** at least one electronic component or other, pressure-sensitive element is embedded in the electron-beam cured material interconnecting the two foil layers.

3. A method for producing a multilayer card-shaped data carrier, comprising the steps of:
- making available a first foil layer (E1) equipped with one or several electronic components or other, pressure-sensitive elements,
- making available at least one second foil layer (O; C, O),
- applying electron-beam curable material on the first foil layer (E1) in such a fashion that the mentioned elements are embedded therein,
- drying the electron-beam curable material by means of electron irradiation, and
- applying electron-beam curable material on at least one surface of the dried first foil layer (E1) or a surface of the second foil layer (C),
- joining the first and second foil layers in such a fashion that the electron-beam curable material forms a connection between the two foil layers, and
- drying the electron-beam curable material present as connection by means of electron irradiation to produce a firm layer composite (L; L₀; C+O).

4. The method according to claim 3, **characterized in that** the first foil layer (C) is printed before the step of joining, preferably on both sides in exact mutual register.

5. The method according to claim 3 or 4, **characterized in that** the data carrier is manufactured of at least three layers, by applying a second foil layer on each surface of the first foil layer in such a fashion that the electron-beam curable material respectively forms a connection between the first and the respectively second foil layer.

6. The method according to claim 5, **characterized in that** the data carrier is manufactured of five layers, by applying, respectively on the outwardly pointing surface of the two second foil layers (C), electron-beam curable material in a thickness which, after drying by means of the electron irradiation, is sufficient to form a full-surface outer cover layer (O) of the data carrier to be manufactured.

7. The method according to claim 5, **characterized in that** the data carrier is manufactured of at least five layers, by applying electron-beam curable material respectively on the outwardly pointing surface of the two second foil layers (C), and applying a respective third foil layer (O) thereon.

8. The method according to claim 7, **characterized in that** the electron-beam curable material connecting the first foil layer (E) with the two second foil layers (C) and the electron-beam curable material connecting the two second foil layers (C) with the two third foil layers (O) are dried simultaneously by means of electron irradiation of the complete layer structure.

9. The method according to claim 7, **characterized in that** the electron-beam curable material connecting the two second foil layers (C) with the respective third foil layer (O) is dried by means of electron irradiation before the two second foil layers (C) are applied on the first foil layer (E).

10. The method according to claim 8 or 9, **characterized in that** before applying the two second foil layers (C) on the first foil layer (E1) a reactive one-component system or two-component system is applied that supports a firm connection between at least one of the two second foil layers and the first foil layer.

11. The method according to claim 3, **characterized in that** the step of drying the electron-beam curable material by means of electron irradiation takes place, after the step of joining the first and second foil layers, in such a fashion that the electron-beam curable material forms a connection between the first and second foil layers.

12. The method according to claim 3, **characterized in that** the step of drying the electron-beam curable material by means of electron irradiation takes place before the step of joining the first and second foil layers, wherein the production of a firm layer composite takes place between the first foil layer (E1) furnished with the electron-beam cured material and the second foil layer (C) by means of a cold laminating adhesive.

13. The method according to claim 12, **characterized in that** electron-beam curable material that is dried through the layer structure by means of electron irradiation serves as cold laminating adhesive.

## Revendications

1. Support de données multicouche en forme de carte, **caractérisé en ce qu'**une couche du support de données située à l'intérieur dans laquelle un ou plusieurs composants électroniques ou d'autres éléments sensible à la pression sont encastrés consiste en un matériau durci par faisceau d'électrons et **en ce qu'**au moins deux couches de film (E, C, O) du support de données sont jointes entre elles par matériau durci par faisceau d'électrons.

2. Support de données selon la revendication 1, **caractérisé en ce que**, dans le matériau durci par faisceau d'électrons joignant entre elles les deux couches de film, au moins un composant électronique ou autre élément sensible à la pression est encastré.

3. Procédé de fabrication d'un support de données multicouche en forme de carte, comprenant les étapes:
- mise à disposition d'une première couche de film (E1) qui est garnie d'un ou de plusieurs composants électroniques ou d'autres éléments sensible à la pression,
- mise à disposition d'au moins une deuxième couche de film (O; C, O),
- application de matériau durcissable par faisceau d'électrons sur la première couche de film (E1) de telle façon que lesdits éléments sont encastrés dedans,
- séchage du matériau durcissable par faisceau d'électrons au moyen d'irradiation d'électrons, et
- application de matériau durcissable par faisceau d'électrons sur au moins une surface de la première couche de film (E1) séchée ou une surface de la deuxième couche de film (C),
- accolement des première et deuxième couches de film de telle façon que le matériau durcissable par faisceau d'électrons forme une jonction entre les deux couches de film, et
- séchage du matériau durcissable par faisceau d'électrons se présentant en tant que jonction au moyen d'irradiation d'électrons afin de générer un composite de couches ferme (L; L₀; C+O).

4. Procédé selon la revendication 3, **caractérisé en ce que** la première couche de film (C) est imprimée avant l'étape de l'accolement, de préférence des deux côtés en parfait repérage l'un par rapport à l'autre.

5. Procédé selon la revendication 3 ou 4, **caractérisé en ce que** le support de données est fabriqué en au moins trois couches, ce qui a lieu **en ce que**, sur chaque surface de la première couche de film (E1), une deuxième couche de film (C) est plaquée de telle façon que le matériau durcissable par faisceau d'électrons forme respectivement une jonction entre la première et respectivement la deuxième couche de film.

6. Procédé selon la revendication 5, **caractérisé en ce que** le support de données est fabriqué en cinq couches, ce qui a lieu **en ce que**, respectivement sur la surface tournée vers l'extérieur des deux deuxièmes couche de film (C), du matériau durcissable par faisceau d'électrons est appliqué dans une épaisseur suffisante pour former après le séchage, au moyen de l'irradiation d'électrons, une couche de recouvrement (O) extérieure à pleine surface du support de données à fabriquer.

7. Procédé selon la revendication 5, **caractérisé en ce que** le support de données est fabriqué en au moins cinq couches, ce qui a lieu **en ce que**, respectivement sur la surface des deux deuxièmes couches de film (C) tournée vers l'extérieur, du matériau durcissable par faisceau d'électrons est appliqué et respectivement une troisième couche de film (O) est plaquée par dessus.

8. Procédé selon la revendication 7, **caractérisé en ce que** le matériau durcissable par faisceau d'électrons joignant la première couche de film (E) avec les deux deuxièmes couches de film (C) et le matériau durcissable par faisceau d'électrons joignant les deux deuxièmes couches de film (C) avec les deux troisièmes couche de film (O) sont séchés en même temps par irradiation d'électrons de toute la structure à couches.

9. Procédé selon la revendication 7, **caractérisé en ce que** le matériau durcissable par faisceau d'électrons joignant les deux deuxièmes couches de film (C) avec la troisième couche de film (O) respective est séché par irradiation d'électrons avant que les deux deuxièmes couches de film (C) soient appliquées sur la première couche de film (E).

10. Procédé selon la revendication 8 ou 9, **caractérisé en ce que**, avant le plaquage des deux deuxièmes couches de film (C) sur la première couche de film (E1), un système réactif soit à un composant, soit à deux composants favorisant une solide jonction entre au moins une des deux deuxièmes couches de film et la première couche de film est appliqué.

11. Procédé selon la revendication 3, **caractérisé en ce que** l'étape du séchage du matériau durcissable par faisceau d'électrons a lieu de telle façon par irradiation d'électrons après l'étape de l'accolement des première et deuxième couches de film que le matériau durcissable par faisceau d'électrons forme une jonction entre les première et deuxième couches de film.

12. Procédé selon la revendication 3, **caractérisé en ce que** l'étape du séchage du matériau durcissable par faisceau d'électrons a lieu par irradiation d'électrons avant l'étape de l'accolement des première et deuxième couches de film, la génération d'un composite de couches ferme entre la première couche de film (E1) pourvue du matériau durci par faisceau d'électrons et la deuxième couche de film (C) ayant lieu au moyen d'un adhésif de pelliculage à froid.

13. Procédé selon la revendication 12, **caractérisé en ce que**, en tant qu'adhésif de pelliculage à froid, il est utilisé un matériau durcissable par faisceau d'électrons qui est séché par irradiation d'électrons à travers la structure à couches.
